# EUROPEAN PATENT APPLICATION

(11) **EP 1 588 842 A1**
(43) Date of publication of application: **26.10.2005**
(21) Application number: 03815608.9
(22) Date of filing: 27.11.2003
(51) Int. Cl.: B32B 27/28, B32B 27/34, B32B 27/36, B65D 65/40

(54) **PROCESS FOR PRODUCING BARRIER PACKAGING MATERIAL**

(30) Priority: 31.01.2003 JP 2003024211
(71) Applicant: Tetra Laval Holdings & Finance S.A., 1009 Pully (CH)
(72) Inventor: FRISK, Peter, NIHON TETRA PAK K.K., Tokyo 102-8544 (JP); OGITA, Hiroaki, NIHON TETRA PAK K.K., Tokyo 102-8544 (JP)
(74) Representative: Müller, Hans-Jürgen
(86) International application number: PCT/JP2003/015130
(87) International publication number: WO 2004/067274

(57) **Abstract**

The present invention provides a process for producing a barrier packaging material which, in the process for producing a multilayer barrier packaging material, can reduce the number of processes, can simplify each of the processes per se, is thin in thickness of an entire packaging material even though a multilayer, reduces the number of adhesive layers, and is advantageous in cost and environment.

The process for producing a thin and multilayer barrier packaging material is to provide a 20 µm to 45 µm thick biaxially oriented film having ethylene-vinyl alcohol copolymer layers, polyamide layers directly bonded to both surfaces of the ethylene-vinyl alcohol copolymer layers and heat-adhesive polyethylene layers laminated via adherent resin layers at each external surface of the polyamide layers, to subject to corona discharge treatment on the surfaces to be joined by poly(ethylene terephthalate) films of 5 µm to 15 µm thickness and the biaxially oriented film, and after the above-described treatment, to perform thermocompression bonding of the treated surface to be joined by the poly(ethylene terephthalate) films and the biaxially oriented film, by means of nip rolls.

## Description

### Technical Field

The present invention relates to a process for producing a thin and multilayer barrier packaging material.

### Background Art

A barrier packaging material having shielding properties against gas such as oxygen or the like, an aromatic odor and others includes ethylene-vinyl alcohol copolymers (EVOH), polyamide (PA) such as nylon or the like, plastic films evaporated with a silicon oxide (SiOx) or the like, poly(ethylene terephthalate) (PET), and other materials.

In response to various applications, a functional film material is laminated, thus various multilayer barrier packaging materials have come on the market, and have been proposed.

In a conventional technique as described above, there are the inconveniences of laminating the functional film material as described above in response to a function required for the films, for example, such as gas barrier properties, aroma retention properties, flexibility and heat sealability, requiring steps such as pre-treatment, lamination processes, post-treatment and others for each laminated layer, numbering many processes, and complicating the processes.

In addition, there is also a case where the inconvenience arises such that, as the number of layers increases, the thickness of entire multilayer barrier packaging materials increases, thus thin films can not be obtained.

Further, adhesive layers, which join a gap between functional material layers having gas barrier properties, aroma retention properties, flexibility, heat sealability or the like, occupy a large proportion of entire packaging materials, thus it is necessary to reduce amounts to be used therein from the viewpoint of cost and environment.

### Disclosure of Invention

It is an object of the present invention to provide a process for producing a barrier packaging material which can reduce the number of processes, can simplify each of the processes per se, is thin in thickness of entire packaging materials even though a multilayer, reduces the number of adhesive layers, and is advantageous in cost and environment in a process for producing multilayer barrier packaging materials.

The invention of the process for producing a thin and multilayer barrier packaging material for solving this problem is characterized by providing a biaxially oriented film of 20 µm to 45 µm thickness, which has ethylene-vinyl alcohol copolymer layers, polyamide layers directly bonded to both surfaces of the ethylene-vinyl alcohol copolymer layers and heat-adhesive polyethylene layers laminated via adherent resin layers at each external surface of the polyamide layers,
subjecting to corona discharge treatment on the surfaces to be joined by poly(ethylene terephthalate) films of 5 µm to 15 µm thickness and the biaxially oriented film, and after the above-described treatment, performing thermocompression bonding of the surfaces to be joined by the poly(ethylene terephthalate) films and the biaxially oriented film, by means of nip rolls.

With such constitution, even in the process for producing the multilayer barrier packaging materials, the number of processes can be reduced and each of the processes per se can be simplified. Further, even though a multilayer, the thickness of the entire packing materials can be thinned, the number of the adhesive layers is reduced, and it is advantageous from the viewpoint of cost and environment.

In a first aspect of the present invention, a process for producing a thin and multilayer barrier packaging material is characterized by providing a biaxially oriented film of 20 µm to 45 µm thickness, which has ethylene-vinyl alcohol copolymer layers, polyamide layers directly bonded to both surfaces of the ethylene-vinyl alcohol copolymer layers and heat-adhesive polyethylene layers laminated via adherent resin layers at each external surface of the polyamide layers, subjecting to corona discharge treatment on the surfaces to be joined by poly(ethylene terephthalate) films of 5 µm to 15 µm thickness and the biaxially oriented film, and after the above-described treatment, performing thermocompression bonding of the surfaces to be joined by the poly(ethylene terephthalate) films and the biaxially oriented film, by means of nip rolls.

In a second aspect of the present invention, a process for producing a thin and multilayer barrier packaging material is characterized by providing a biaxially oriented film of 20 µm to 45 µm thickness, which has ethylene-vinyl alcohol copolymer layers, polyamide layers directly bonded to both surfaces of the ethylene-vinyl alcohol copolymer layers and the heat-adhesive polyethylene layers laminated via adherent resin layers at each external surface of the polyamide layers, and a poly(ethylene terephthalate) film (SiOx-PET) of 5 µm to 15 µm thickness, which has evaporated layers of a silicon oxide (SiOx) on one surface thereof; activating surfaces to be joined by the poly(ethylene terephthalate) films and the biaxially oriented film, and after the above-described treatment; and performing thermocompression bonding of the surfaces to be joined by the poly(ethylene terephthalate) films and the biaxially oriented film, by means of nip rolls.

With the above-described constitution, there is provided an action capable of maintaining the gas barrier properties of the evaporated layers of the silicon oxide while imparting aroma retention properties, flexibility and heat sealability.

In a third aspect of the present invention, a process for producing a thin and multilayer barrier packaging material is characterized by providing a biaxially oriented film of 20 µm to 45 µm thickness, which has ethylene-vinyl alcohol copolymer layers, polyamide layers directly bonded to both surfaces of the ethylene-vinyl alcohol copolymer layers and heat-adhesive polyethylene layers laminated via adherent resin layers at each external surface of the polyamide layers; activating both surfaces of a poly(ethylene terephthalate) film of 5 µm to 15 µm thickness and surfaces to be joined by the biaxially oriented film for improving adhesive properties; and after the above-described treatment, performing thermocompression bonding of the surfaces to be joined by both surfaces of the poly(ethylene terephthalate) film and the biaxially oriented film, by means of nip rolls.

With the above-described constitution, there is provided an action that can thin the thickness of the entire packaging materials even though a multilayer, reduces the number of adhesive layers, and is advantageous from the viewpoint of cost and environment.

### Best Mode for Carrying Out The Invention

An embodiment of the present invention will be described bellow.

In a process for producing multilayer barrier packaging materials of this embodiment of the present invention, a biaxially oriented film of 20 µm to 45 µm thickness is provided, which has ethylene-vinyl alcohol copolymer layers (EVOH), polyamide layers (PA) directly bonded to both surfaces of the ethylene-vinyl alcohol copolymer layers (EVOH) and heat-adhesive and low density polyethylene layers (LDPE) laminated via adherent resin layers (Adh) at each external surface of the polyamide layers.

The above-described biaxially oriented film has a layer configuration of LDPE/Adh/PA/EVOH/PA/Adh/LDPE.

In this invention, polyamide includes nylon-MXD6, nylon-6 (PA-6) and nylon-66 (PA-66), a blend (PA-6/66) of nylon-6 and nylon-66, or the like. By admixing nylon-MXD6 with other polyamides, properties, for example improved elongation at break, are improved.

In one preferred embodiment of this invention, polyamide is a ┌nylon-clay hybrid┘ (NCH). This NCH is a molecular composite material composed of polyamide such as PA-6, PA-66, PA-6/66 or the like, and a uniformly dispersed fine layer silicate.

Accordingly, for example, by admixing nylon-MXD6 with the NCH based on PA-6, not only mechanical properties but also optimum gas barrier properties are obtained.

Prior to laminating a poly(ethylene terephthalate) film of 5 µm to 15 µm thickness and a biaxially oriented film, each surface to be joined is subjected to surface activating treatment, for example corona discharge treatment, for improving adhesive properties. The treatment is performed at least to the surface to be joined.

After the above-described treatment, the surface to be joined by the poly(ethylene terephthalate) film and the biaxially oriented film is subjected to thermocompression bonding by means of nip rolls.

As adhesive layer to be joined, ethylene-acrylic acid copolymers, ethylene-methacrylic acid copolymers, ethylene-methyl methacrylate copolymers, ionomers, low density polyethylene, linear low density polyethylene produced using a metallocene catalyst and others are usable.

As described above, by the present invention, even in the process for producing the multilayer barrier packaging materials, the number of processes can be reduced, and each of the processes per se can be simplified. Further, even though a multilayer, the thickness of the entire packaging materials can be thinned, the number of adhesive layers is reduced, and it is advantageous from the viewpoint of cost and environment.

### Industrial Applicability

A barrier packaging material of this invention is utilized for packaging containers storing liquid foods such as milk, refreshing drinks or the like.

## Claims

1. A process for producing a thin and multilayer barrier packaging material comprising the steps of :
providing a biaxially oriented film of 20 µm to 45 µm thickness, having ethylene-vinyl alcohol copolymer layers, polyamide layers directly bonded to both surfaces of the ethylene-vinyl alcohol copolymer layers and heat-adhesive polyethylene layers laminated via adherent resin layers at each external surface of the polyamide layers;
subjecting to corona discharge treatment on the surfaces to be joined by poly(ethylene terephthalate) films of 5 µm to 15 µm thickness and the biaxially oriented film; and
after the above-described treatment, performing thermocompression bonding of the surfaces to be joined by the poly(ethylene terephthalate) films and the biaxially oriented film, by means of nip rolls.

2. A process for producing a thin and multilayer barrier packaging material comprising the steps of:
providing a biaxially oriented film of 20 µm to 45 µm thickness, having ethylene-vinyl alcohol copolymer layers, polyamide layers directly bonded to both surfaces of the ethylene-vinyl alcohol copolymer layers and heat-adhesive polyethylene layers laminated via adherent resin layers at each external surface of the polyamide layers, and a poly(ethylene terephthalate) film of 5 µm to 15 µm thickness, having evaporated layers of a silicon oxide on one surface thereof;
activating surfaces to be joined by the poly(ethylene terephthalate) films and the biaxially oriented film; and
after the above-described treatment, performing thermocompression bonding of the surfaces to be joined by the poly(ethylene terephthalate) films and the biaxially oriented film, by means of nip rolls.

3. A process for producing a thin and multilayer barrier packaging material having a thickness of 65 µm or thinner comprising the steps of:
providing a biaxially oriented film of 20 µm to 45 µm thickness, having ethylene-vinyl alcohol copolymer layers, polyamide layers directly bonded to both surfaces of the ethylene-vinyl alcohol copolymer layers and heat-adhesive polyethylene layers laminated via adherent resin layers at each external surface of the polyamide layers;
activating both surfaces of a poly(ethylene terephthalate) film of 5 µm to 15 µm thickness and the biaxially oriented film for improving adhesive properties; and
after the above-described treatment, performing thermocompression bonding of the surfaces to be joined by the both surfaces of the poly(ethylene terephthalate) film and the biaxially oriented film, by means of nip rolls.
